# EUROPEAN PATENT APPLICATION

(11) **EP 0 745 523 A1**
(43) Date of publication of application: **04.12.1996**
(21) Application number: 96108229.4
(22) Date of filing: 23.05.1996
(51) Int. Cl.: B60S 1/48

(54) **A device for heating the washing liquid to be sprayed onto a vehicle windscreen**

(30) Priority: 29.05.1995 IT TO950121 U
(71) Applicant: Cooper Industries Italia S.p.A., I-20124 Milano (IT)
(72) Inventor: Scorsiroli, Marcello, 10137 Torino (IT)
(74) Representative: Marchitelli, Mauro

(57) **Abstract**

The device comprises a glow-plug (22) having a stem (28) which can be heated by an electric current. The stem (28) is coupled to a body (34) of thermally insulating material and a helical path (36) for the fluid to be heated, along which the fluid comes directly into contact with the heated stem (28), is defined between the stem (28) and the body (34).

## Description

The present invention relates to a device for heating the washing liquid to be sprayed onto a vehicle windscreen.

Heating devices using an electric heating means operating according to the principle of a storage water-heater (a boiler), that is, a heater in which a certain volume of liquid to be heated is kept constantly at the heating temperature provided for, are already known. Devices of this type are rarely used, particularly because of their high cost.

The present invention has been developed in order to heat the liquid for washing a vehicle windscreen, which is intended to remove deposits, insect bodies, tree resin and any other form of solid dirt adhering to the windscreen. In the presence of dirt of this type, the softening effect of the hot liquid considerably facilitates the cleaning of the windscreen and, as should not be overlooked, prevents or at least limits damage to the windscreen-wiper blades which, as is known, are extremely sensitive to the presence of hard deposits on the windscreen. The heating of the washing liquid is also useful in winter when ice is formed on the windscreen.

The device according to the invention is characterized essentially in that it comprises a glow plug of the type normally used for the pre-heating of diesel engines, having a stem which can be heated by the passage of an electric current. The stem is coupled to a body of thermally insulating material and a helical path for the fluid to be heated, along which the fluid comes directly into contact with the heated stem, is defined between the body and the stem.

Unlike previously known solutions, the device according to the invention heats the washing liquid as it is pumped from the reservoir. The direct contact of the liquid with the incandescent stem of the glow plug enables an operating temperature (for example of the order of 40°C), which is sufficient to soften the hard and resistant deposits present on the windscreen, to be reached in a few seconds. The glow plug of the device according to the invention is supplied with an electric current solely upon activation of the pump for the washing liquid. The plug is heated quickly and the stem becomes incandescent in a few seconds. In order further to reduce the time taken to heat the flow of washing liquid, two or more similar heating devices may be arranged in series.

The heating device according to the present invention constitutes an accessory which can be installed in any model of vehicle without the need to make substantial changes in the arrangement envisaged for the components of the washing circuit at the design stage.

Further characteristics and advantages of the present invention will become clear in the course of the following detailed description given purely by way of non-limiting example, with reference to the appended drawings, in which:
Figure 1 is a simplified diagram showing the way in which a heating device according to the present invention is used,
Figure 2 is a schematic section of a first embodiment of the device according to the invention, and
Figure 3 is a variant of the device of Figure 2.

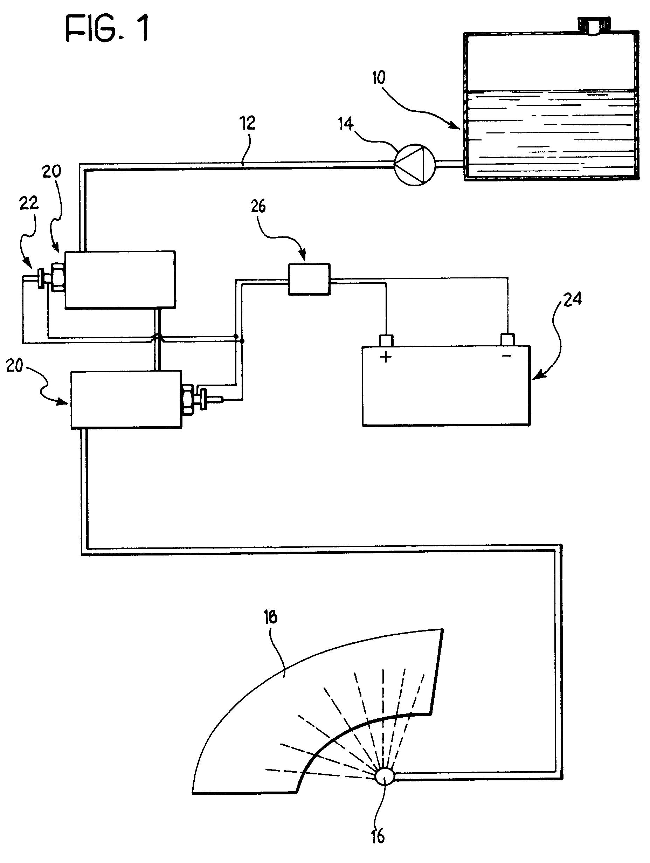

With reference initially to Figure 1, a reservoir, indicated 10, contains washing liquid which is supplied along a line 12 by a pump 14. The line 12 supplies the washing liquid to one or more spray nozzles 16 which send jets of washing liquid onto the vehicle windscreen, schematically indicated 18. Two heating devices 20 are disposed along the line 12 for heating the flow of washing liquid as it passes along the line 12.

In the embodiment shown in Figure 1, two heating devices have been shown, arranged in series. However, the number of heating devices may be varied according to specific requirements. More precisely, in some cases a single heating device 20 may suffice; if it is desired to reduce the time taken to heat the washing fluid, several devices of the same type may be arranged in series.

Each heating device 20 has an electric heating element 22 supplied by the battery 24 of the vehicle. A control element 26, which may be of various kinds and which - in its simplest form - is constituted simply by a relay which supplies the heating element 22 only when a flow of heated liquid is required, is provided in the electrical supply line to the heating element 22. The control member 26 can be activated simultaneously with the pump 14 and may possibly be subject to a control, for example, a thermostatic control, dependent upon the temperature of the heating element 22.

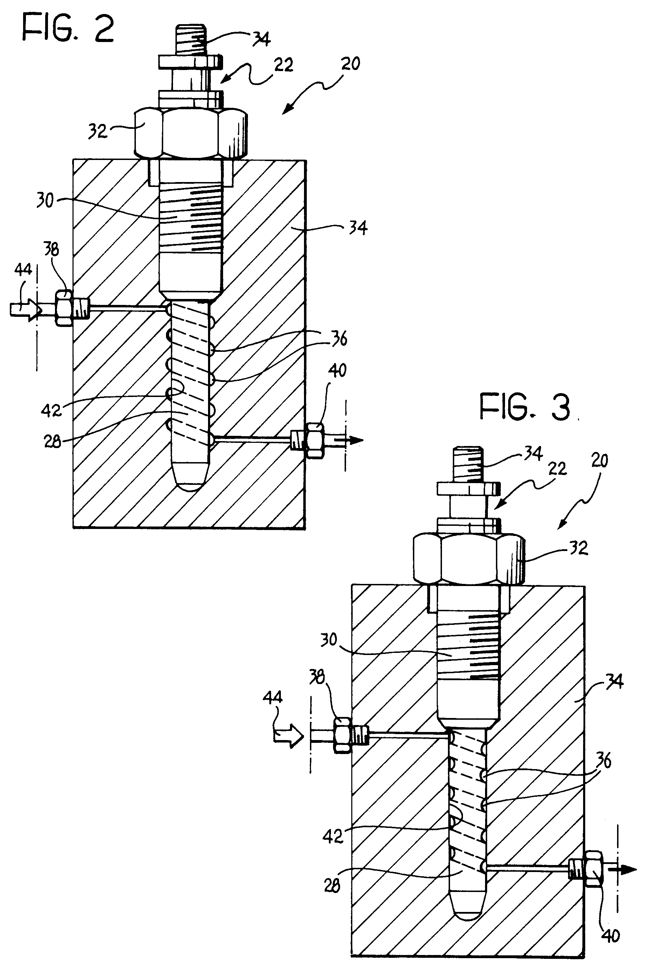

With reference now to Figure 2, the heating element 22 of the device according to the present invention is constituted by a glow plug of the type normally used for pre-heating diesel engines. The plug 22 comprises, in known manner, a stem 28 which is brought to a very high temperature in a few seconds by the passage of an electric current. The plug 22 also has a threaded fixing portion 30 as well as an electrical connection portion 34.

The glow plug 22 is coupled to a body 34, preferably made of thermally insulating material. A helical path 36 for the fluid to be heated is defined between the body 34 and the stem 28 of the plug 22. The helical path 36 communicates at its ends with connectors 38 and 40 for connection to the washing-liquid supply line 12.

In the embodiment shown in Figure 2, the helical path 36 is defined by a thread formed in a hole 42 having the same diameter as the stem 28. The stem 28 has a smooth outer surface which closes the hole 42 substantially sealingly so that the liquid supplied to the inlet connector 38 in the direction indicated by the arrow 44 is forced to travel along the helical path 36 before reaching the outlet connector 40. Along the helical path 36, the liquid is directly in contact with the incandescent stem 28 and can thus be heated very rapidly.

The insulating body 34 may be made of refractory or sintered material which may be porous to the washing liquid. In this case, the hole 42 and the thread defining the helical path 36 may be made impermeable by means of varnishes resistant to high temperatures.

Figure 3 shows a variant of the device according to the invention, in which parts corresponding to those described above are indicated by the same reference numerals. In the variant of Figure 3, the hole 42 in the thermally insulating body 34 has a smooth inner wall and the helical path 36 is formed on the stem 28 of the plug 22. In this embodiment, the coupling between the stem 28 and the hole 42 also achieves a seal adequate to ensure that the fluid coming from the inlet connector 38 flows along the helical path 36, being heated by direct contact with the incandescent stem 28.

## Claims

1. A device for heating the washing liquid to be sprayed onto a vehicle windscreen, characterized in that the device comprises a glow plug (22) having a stem (28) which can be heated by an electric current, in which the stem (28) is coupled to a body (34) of thermally insulating material, and in which a helical path (36) for the fluid to be heated, along which the fluid comes directly into contact with the heated stem (28), is defined between the body (34) and the stem (28).

2. A device according to Claim 1, characterized in that the stem (28) of the plug (22) has a smooth outer surface and is inserted in a hole (42) in the internal surface of which the helical path (36) is formed.

3. A device according to Claim 1, characterized in that the stem (28) of the plug (22) is inserted in a hole (42) with a smooth wall, and in that the helical path (36) is formed in the outer surface of the stem (28).

4. A device according to any one of the preceding claims, characterized in that the internal surface of the hole (42) is rendered impermeable by means of a varnish resistant to high temperatures.
